(19) **Europäisches Patentamt / European Patent Office / Office européen des brevets**

(11) **EP 4 601 110 A1**

(12) **EUROPEAN PATENT APPLICATION**
published in accordance with Art. 153(4) EPC

(43) Date of publication:
**13.08.2025 Bulletin 2025/33**

(21) Application number: **23890576.4**

(22) Date of filing: **31.10.2023**

(51) International Patent Classification (IPC):
***H01M 50/533*** (2021.01)

(52) Cooperative Patent Classification (CPC):
**H01M 50/533; H01M 4/02; H01M 4/661;**
**H01M 4/70; H01M 50/528; H01M 50/536;**
**H01M 50/538; B60L 50/64; H01M 2004/028;**
**H01M 2220/20; Y02E 60/10**

(86) International application number:
**PCT/CN2023/128306**

(87) International publication number:
**WO 2024/104140 (23.05.2024 Gazette 2024/21)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.11.2022 CN 202223034573 U**

(71) Applicant: **Contemporary Amperex Technology**
**Co., Limited**
**Ningde, Fujian 352100 (CN)**

(72) Inventors:
• **WANG, Qiaoge**
**Ningde, Fujian 352100 (CN)**
• **CHENG, Qi**
**Ningde, Fujian 352100 (CN)**
• **LI, Xiaowei**
**Ningde, Fujian 352100 (CN)**

(74) Representative: **Gong, Jinping**
**CocreateIP**
**Neumarkter Straße 21**
**81673 München (DE)**

(54) **POLE PIECE, BATTERY CELL, ELECTRODE ASSEMBLY, BATTERY, AND ELECTRICAL DEVICE**

(57) This application discloses an electrode plate, a battery cell, an electrode assembly, a battery, and an electrical device, and relates to the field of battery technology. The electrode plate includes a current collector. The current collector includes a main body and a plurality of tabs. The main body includes a first edge in a width direction of the main body. The tabs protrude from the first edge. The plurality of tabs are spaced apart along a length direction of the main body. The plurality of tabs include at least one first tab. The first tab includes a first sub-tab and a second sub-tab. A gap exists between the first sub-tab and the second sub-tab. This application weakens the bending strength of the first tab, reduces the difficulty of bending the first tab under pressure, and reduces the risk of excessive deformation of the main body caused by an excessive external force required for bending the first tab under pressure, thereby improving reliability of the battery cell.

FIG. 9

## Description

## CROSS-REFERENCE TO RELATED APPLICATIONS

This application claims priority to Chinese Patent Application No. 202223034573.5, filed on November 14, 2022 and entitled "ELECTRODE PLATE, BATTERY CELL, ELECTRODE ASSEMBLY, BATTERY, AND ELECTRICAL DEVICE", which is incorporated herein by reference in its entirety.

## TECHNICAL FIELD

This application relates to the technical field of batteries, and in particular, to an electrode plate, a battery cell, an electrode assembly, a battery, and an electrical device.

## BACKGROUND

Batteries have been widely used in electronic devices such as electric power carts, electric vehicles, electric aircraft, and electric ships.

How to enhance the reliability of the battery cell is a pressing challenge in the battery technology.

## SUMMARY

In view of the above situation, this application provides an electrode plate, a battery cell, an electrode assembly, a battery, and an electrical device to improve reliability of the battery cell.

According to a first aspect, this application provides an electrode plate. The electrode plate includes a current collector. The current collector includes a main body and a plurality of tabs. The main body includes a first edge in a width direction of the main body. The tabs protrude from the first edge. The plurality of tabs are spaced apart along a length direction of the main body. The plurality of tabs include at least one first tab. The first tab includes a first sub-tab and a second sub-tab. A gap exists between the first sub-tab and the second sub-tab.

In the technical solution disclosed in this embodiment of this application, the first tab includes a first sub-tab and a second sub-tab, a gap exists between the first sub-tab and the second sub-tab, thereby weakening the bending strength of the first tab, reducing the difficulty of bending the first tab under pressure, and reducing the risk of excessive deformation of the main body caused by an excessive external force required for bending the first tab under pressure, and in turn, improving reliability of the battery cell.

In some embodiments, the first tab includes a first sub-tab and a second sub-tab, a gap exists between the first sub-tab and the second sub-tab, a width of the first tab is $W_1$, and a width of the gap is $W_3$, satisfying:

$$0 < W_3 < \frac{W_1}{20},$$ where the groove is configured to weaken the bending strength of the first tab. With such a design, on the premise that a gap exists on the first tab, the first sub-tab and the second sub-tab still provide a relatively large flow area.

In some embodiments, the gap extends along the width direction of the main body, and the first sub-tab and the second sub-tab are arranged along a length direction of the main body. This design makes the extending direction of the gap substantially consistent with the bending direction of the first tab, thereby reducing the risk of tearing at the root of the first sub-tab and the root of the second sub-tab during the bending of the first tab.

In some embodiments, in the width direction of the main body, a height of the first tab is $H_1$, and a length of the gap is $H_4$, satisfying: $H_4 = H_1$. This design makes the height of the first tab identical to the length of the gap, thereby reducing the difficulty of processing the gap.

In some embodiments, the first sub-tab and the second sub-tab are symmetrical with respect to the gap. In a process of bending the first tab, the first tab is generally bent along the width direction of the main body. The center line of the first tab is parallel to the width direction of the main body. This design optimizes the force consistency between the first sub-tab and the second sub-tab.

In some embodiments, all the tabs are the first tabs; and/or the electrode plate is a positive electrode plate; and/or the current collector is made of aluminum. After the electrode plate is wound, the plurality of first tabs are stacked to form a first tab bundle. In this design, the first tab bundle includes a plurality of gaps, thereby reducing the difficulty of bending the first tab bundle under pressure, reducing the risk of widening the gap between layers of the wound main body due to an excessive external force required for bending the first tab bundle under pressure, and in turn, improving the reliability of the battery cell.

According to a second aspect, this application provides an electrode assembly. The electrode assembly includes the electrode plate disclosed in the above embodiment.

According to a third aspect, this application provides a battery cell. The battery cell includes the electrode assembly disclosed in the above embodiment.

In some embodiments, the battery cell further includes a conductive piece. The first sub-tab is welded to the conductive piece to form a first weld region. The second sub-tab is welded to the conductive piece to form a second weld region.

In some embodiments, in the length direction of the main body, a width of the first tab is $W_1$, and a width of the gap is $W_3$; a dimension of the first weld region along the length direction of the main body is equal to a dimension of the second weld region along the length direction of the main body and is $W_2$, satisfying: $0 < W_2 < \frac{W_1}{2} - \frac{W_3}{2}$; or, in the length direction of the main body, a distance between the first weld region and the gap is equal to a distance between the second weld region and the gap and is $W_4$, satisfying: $0 < W_4 < \frac{W_1}{2} - \frac{W_3}{2}$.

This design ensures that the first weld region does not intersect the edge of the first sub-tab and the second weld region does not intersect the edge of the second sub-tab, and this design reduces the risk that a part of the first weld region and a part of the second weld region falls in the gap to cause a cold solder joint in a process of welding the first sub-tab to the conductive piece and welding the second sub-tab to the conductive piece.

In some embodiments, in the length direction of the main body, a height of the first tab is $H_1$, and a distance between the first weld region and the first edge is equal to a distance between the second weld region and the first edge and is $H_2$, satisfying: $\frac{H_1}{2} < H_2 < H_1$. After the first sub-tab is welded to the conductive piece, the bending difficulty of the first sub-tab is increased at a position of the first weld region; and, after the second sub-tab is welded to the conductive piece, the bending difficulty of the second sub-tab is increased at a position of the second weld region. This design makes the first weld region be positioned at the upper half of the first sub-tab and makes the second weld region be positioned at the upper half of the second sub-tab, thereby reducing the risk of widening the gap between layers of the wound electrode assembly due to increased difficulty of bending under pressure at the root of the first sub-tab and the root of the second sub-tab, and improving the reliability of the battery cell.

In some embodiments, along the width direction of the main body, a dimension of the first weld region is equal to a dimension of the second weld region and is $H_3$, satisfying: $0 < H_3 < \frac{H_1}{2}$. Setting the dimensions of the first weld region and the second weld region to fall within a reasonable range can reduce the risk that the force required to bend the first tab is increased due to the excessive dimensions of the first weld region and the second weld region, and that the external force is transmitted to the main body and results in a larger gap between layers of the electrode assembly.

In some embodiments, the battery cell includes an electrode terminal. The conductive piece is a connection strap that connects the first tab and the electrode terminal, or the conductive piece is the electrode terminal.

According to a fourth aspect, this application provides a battery. The battery includes the battery cell disclosed in the above embodiment.

According to a fifth aspect, this application provides an electrical device. The electrical device includes the electrical device disclosed in the above embodiment. The battery is configured to provide electrical energy.

**BRIEF DESCRIPTION OF DRAWINGS**

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:

FIG. 1 is a schematic structural diagram of a vehicle according to some embodiments of this application;
FIG. 2 is an exploded view of a battery according to some embodiments of this application;
FIG. 3 is a schematic structural diagram of a battery module according to some embodiments of this application;
FIG. 4 is an exploded view of a battery cell according to some embodiments of this application;
FIG. 5 is a cross-sectional view of a battery cell according to some embodiments of this application;
FIG. 6 is a cross-sectional view of a battery cell according to some other embodiments of this application;
FIG. 7 is a close-up view of a part A shown in FIG. 6;
FIG. 8 is a schematic structural diagram of a part of an electrode plate according to some embodiments of this application;
FIG. 9 is a close-up view of a part B shown in FIG. 8;
FIG. 10 is a schematic structural diagram of a part of an electrode plate according to some other embodiments of this application;
FIG. 11 is a schematic structural diagram of an electrode assembly according to some embodiments of this application;
FIG. 12 is a close-up view of a part C shown in FIG. 11; and
FIG. 13 is a schematic structural diagram of a part of a battery cell according to some embodiments of this application.

List of reference numerals:

10000-vehicle; 2000-controller; 3000-motor;
1000-battery; 101-first part; 102-second part;
100-battery module;
10-battery cell;
1-shell; 11-housing; 12-end cap; 2-electrode assembly; 21-electrode plate; 211-current collector; 2111-first tab; 21111-first sub-tab; 21112-second sub-tab; 2112-second tab; 2113-main body; 21131-first edge; 2114-gap;
2121-positive tab; 2122-electrode plate body; 22-first clearance; 23-second clearance;
3-connection strap; 4-electrode terminal; 5-first weld region; 6-second weld region; 7-third weld region.

**DETAILED DESCRIPTION OF EMBODIMENTS**

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as nonexclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Batteries mentioned in this field may be classed into a primary battery and a rechargeable battery depending on rechargeability. Currently, common types of rechargeable batteries include: lead-acid battery, nickel-metal hydride battery, and lithium-ion battery. The lithium-ion battery is widely applied to battery electric vehicles and hybrid vehicles currently. The lithium-ion battery for use in such vehicles possesses a relatively low capacity, but a relatively high output current, a relatively high charge current, and a long lifespan in spite of a relatively high cost.

The battery described in the embodiments of this application means a rechargeable battery. The following describes some embodiments of this application by primarily using a lithium-ion battery as an example. Understandably, the disclosed embodiments of this application are applicable to any other suitable types of rechargeable batteries. A battery mentioned in an embodiment disclosed herein is directly or indirectly applicable to an appropriate electrical device to power the electrical device.

The battery mentioned in an embodiment disclosed herein means a single physical module that includes one or more battery cells to provide a preset voltage and a preset capacity. A battery cell is an elementary unit of the battery. Depending on the form of packaging, battery cells are generally classed into three types: cylindrical cell, prismatic cell, and pouch cell. The following description mainly focuses on a prismatic cell. Understandably, the embodiments described below are applicable to cylindrical cells or pouch cells in some aspects.

A lithium-ion battery cell works primarily by movement of lithium ions between the positive electrode plate and the negative electrode plate. A thin film structure compounded of three layers of materials in a cylindrical cell is wound into a cylinder-shaped electrode assembly. The thin film structure in a prismatic cell is wound or stacked to form an electrode assembly in the approximate shape of a cuboid.

In a typical battery cell structure, a battery cell includes a shell, an electrode assembly, and an electrolyte solution. The electrode assembly is accommodated in the shell of the battery cell. The electrode assembly includes a positive electrode plate, a negative electrode plate, and a separator.

The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A part of the surface of the positive current collector is coated with the positive active material layer. A part, uncoated with the positive active material layer, of the positive current collector serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A part of the surface of the negative current collector is coated with the negative active material layer. A part, uncoated with the negative active material layer, of the negative current collector serves as a negative tab. The negative current collector may be made of copper, and a negative active material may be carbon, silicon, or the like.

The shell includes a housing and an end cap. The housing includes an accommodation cavity formed by a plurality of walls and includes an opening. The end cap is disposed at the opening to seal the accommodation cavity.

The accommodation cavity further accommodates an electrolyte solution in addition to the electrode assembly. To reduce the risk that a large electrical current trips the circuit, a plurality of positive tabs are stacked together, and a plurality of negative tabs are stacked together. The tab generally leads out the electrical energy of the electrode assembly by being electrically connected to the conductive piece. In some cases, the conductive piece is a connection strap that connects the tab and the electrode terminal. In some other cases, the conductive piece serves as an electrode terminal.

The electrode terminals generally include a positive electrode terminal and a negative electrode terminal. For a prismatic cell, the electrode terminals are generally disposed at the end cap part. A plurality of battery cells are connected together in series and/or in parallel through electrode terminals, so as to be applied in various scenarios.

In high-power application scenarios such as electric vehicles, a battery is applied in different hierarchical forms such as a battery cell, a battery module, and a battery. The battery module is formed by electrically connecting a specific quantity of battery cells together and putting the battery cells into a frame, so as to protect the battery cells from external impact, heat, vibration, and the like. The battery is a final state of a battery system mounted in an electric vehicle. A battery typically includes a box configured to package one or more battery cells. The box generally includes a cover and a box shell.

During the assembling of a battery cell, the electrode assembly is manufactured first. Assuming that the electrode assembly is a multi-layer jelly-roll structure formed by winding, after a positive electrode plate, a separator, and a negative electrode plate are stacked in sequence, the whole stacked structure is wound into a plurality of layers to form an electrode assembly. The electrode assembly is compacted from a fluffy state to a compact state through hot-press shaping. After the positive electrode plate is wound into a plurality of layers, a plurality of positive tabs are located on the same side of the electrode assembly to form a positive tab bundle. After the negative electrode plate is wound into a plurality of layers, a plurality of negative tabs are located on the same side of the electrode assembly to form a negative tab bundle.

Next, the positive tab bundle and the negative tab bundle are welded to the conductive piece so that the conductive piece can lead out the electrical energy of the electrode assembly when the battery cell is working. For example, if the conductive piece is a connection strap that connects the tab and the electrode terminal, the positive tab bundle is connected to the connection strap by welding, and the negative tab bundle is connected to the connection strap by welding.

Finally, the electrode assembly and the connection strap are placed in the shell to complete the assembling of the battery cell. In an example in which the shell includes a housing and an end cap, after the connection strap is welded to the end cap, the electrode assembly is placed into the housing. An external force is applied to the end cap so that the end cap seals the opening of the housing and seals the accommodation cavity of the shell to complete the assembling of the battery cell. In this case, the positive tab bundle and the negative tab bundle are bent into a C shape under the action of the external force.

Because the positive active material layer is not applied onto the positive tab, considering that the reliability problems such as a short circuit may occur, an insulating ceramic layer is generally applied onto the front side and back side of the positive tab at the root of the positive tab. Generally, the positive current collector is made of aluminum. Consequently, the thickness of the positive tab itself is generally greater than 10 $\mu$m. In addition, the thickness of the insulating ceramic layer is generally greater than 20 $\mu$m, thereby making the thickness very large at the root of the positive tab. Therefore, after a plurality of positive tabs converge into a positive tab bundle, the overall thickness is very large. A relatively large force is required to bend the whole positive tab bundle. When the bending force is overly large, a large force flows through the root of the tab and is transmitted to the region coated with the positive active material layer on the positive current collector, thereby stretching apart the positive electrode plate, negative electrode plate, and separator that are originally tightly bonded together, and resulting in a gap of 50 $\mu$m to 230 $\mu$m between the layers of the electrode assembly. The gap between the layers of the electrode assembly needs to be less than 10 $\mu$m according to the design. That is because, in order to store the gas generated by the battery cell during normal use, an amount of free space needs to be left in the accommodation cavity of the shell. Therefore, the amount of electrolyte solution injected in the shell is limited and unable to fill the entire accommodation cavity. The limited electrolyte solution needs to fill the gaps between the particles of the active material layer in the electrode assembly as much as possible to facilitate the transfer of lithium ions.

If the gaps between the layers of the electrode assembly become larger, not only will the electrolyte solution fail to fill the gaps between the particles of the active material layer, resulting in a longer lithium ion transfer path and difficulty in lithium ion migration, but there will also be a problem of lithium plating at positions of the relatively large gaps between the layers of the electrode assembly, thereby drastically reducing the reliability of the battery cell.

In order to improve the reliability of the battery cell, the structure of the tab may be changed to reduce the difficulty of bending the tab bundle, reduce the force required to bend the tab bundle, and in turn, reduce the possibility of relatively large gaps between the layers of the electrode assembly, and improve the reliability of the battery cell.

In view of this, an electrode plate is designed. At least one tab on the electrode plate is split into two sub-tabs. A gap is left between the two sub-tabs to reduce the difficulty of bending the tab under pressure and improve the reliability of the battery cell.

The technical solution described in an embodiment of this application is applicable to a battery cell, a battery, and an electrical device that employs the battery.

The electrical device may be, but is not limited to, an electric power cart, an electric vehicle, a ship, a spacecraft, or the like. For example, the spacecraft may be an airplane, a rocket, a space shuttle, a spaceship, or the like.

For ease of description in the following embodiment, a vehicle 10000 is used as an example of the electrical device disclosed in an embodiment of this application.

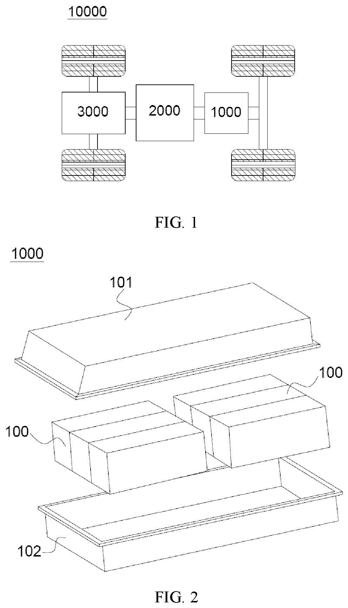

For example, FIG. 1 is a schematic structural diagram of a vehicle 10000 according to some embodiments of this application. The vehicle 10000 may be an oil-fueled vehicle, a natural gas vehicle, or a new energy vehicle. The new energy vehicle may be a battery electric vehicle, a hybrid electric vehicle, a range-extended electric vehicle, or the like. A motor 3000, a controller 2000, and a battery 1000 may be disposed inside the vehicle 10000. The controller 2000 is configured to control the battery 1000 to supply power to the motor 3000. For example, the battery 1000 may be disposed at the bottom, front, or rear of the vehicle 10000. The battery 1000 may be configured to supply power to the vehicle 10000. For example, the battery 1000 may serve as an operating power supply of the vehicle 10000 to power a circuit system of the vehicle 10000. For example, the battery may be configured to meet operating power usage requirements of the vehicle 10000 that is being started or navigated or running. In another embodiment of this application, the battery 1000 serves not only as an operating power supply of the vehicle 10000, but may also serve as a driving power supply of the vehicle 10000 to provide driving power for the vehicle 10000 in place of or partly in place of fuel oil or natural gas.

To meet different power requirements, the battery 1000 may include a plurality of battery cells 10. The plurality of battery cells 10 may be connected in series, parallel, or series-and-parallel pattern. The series-and-parallel pattern means a combination of series connection and parallel connection. The battery 1000 is also referred to as a battery pack. Alternatively, the plurality of battery cells 10 may be connected in series, parallel, or series-and-parallel pattern to form a battery module 100, and then a plurality of battery modules 100 may be connected in series, parallel, or series-and-parallel pattern to form the battery 1000. In other words, the plurality of battery cells 10 may form a battery 1000 directly, or may form a battery module 100 first and then a plurality of battery modules 100 form a battery 1000.

For example, referring to FIG. 2, FIG. 2 is an exploded view of a battery 1000 according to some embodiments of this application. The battery 1000 may include a plurality of battery cells 10. The battery 1000 may further include a box. The interior of the box is a hollow structure. A plurality of battery cells 10 are accommodated in the box. As shown in FIG. 2, the box may include two parts, herein referred to as a first part 101 and a second part 102 respectively. The first part 101 and the second part 102 are snap-fitted together. The shapes of the first part 101 and the second part 102 may depend on the shape of a plurality of battery cells 10 combined. An opening may be created on both the first part 101 and the second part 102. For example, the first part 101 and the second part 102 each may be a hollow cuboid, and each may include one opened surface. The opening of the first part 101 is opposite to the opening of the second part 102. The first part 101 and the second part 102 are snap-fitted to each other to form a box that includes a closed cavity. The plurality of battery cells 10 are combined and connected in parallel, series, or series-and-parallel pattern, and then placed into the box that is formed by snap-fitting the first part 101 and the second part 102.

Optionally, the battery 1000 may further include other structures, details of which are omitted here. For example, the battery may further include a busbar component. The busbar component is configured to implement electrical connection between the plurality of battery cells 10, such as parallel connection, series connection, or series-parallel connection. Specifically, the busbar component may implement the electrical connection between the battery cells 10 by connecting electrode terminals 4 of the battery cells 10. Further, the busbar component may be fixed to the electrode terminals 4 of the battery cells 10 by welding. Electrical energy of the plurality of battery cells 10 may be further led out by a conductive mechanism running through the box. Optionally, the conductive mechanism may also belong to the busbar component.

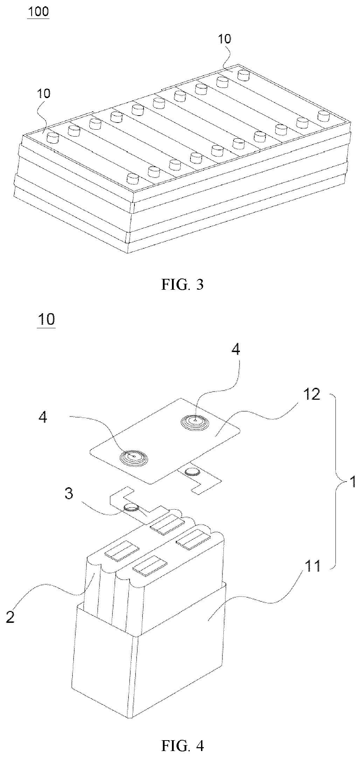

Depending on different power requirements, the number of battery cells 10 may be set to any value. A plurality of battery cells 10 may be connected in series, parallel, or series-and-parallel pattern to achieve a relatively high capacity or power. Each battery 1000 may include a relatively large number of battery cells 10. Therefore, in order to facilitate mounting, the battery cells 10 may be arranged in groups. Each group of battery cells 10 forms a battery module 100. The number of battery cells 10 included in the battery module 100 is not limited, and may be set as required. For example, FIG. 3 is a schematic structural diagram of a battery module 100 according to some embodiments of this application. The battery 1000 may include a plurality of battery modules 100. The battery modules 100 may be connected in series, parallel, or series-and-parallel pattern.

Referring to FIG. 4, FIG. 4 is an exploded view of a battery cell 10 according to some embodiments of this application. The battery cell 10 includes one or more electrode assemblies 2 and a shell 1. The shell 1 may include a housing 11. A plurality of wall portions of the housing 11, that is, a plurality of wall portions of the shell 1, define a cavity. The cavity may be configured to accommodate the electrode assembly 2. The shape of the housing 11 is determined depending on the shape of a combination of one or more electrode assemblies 2. For example, the housing 11 may be a hollow cuboid or cube or regular polyhedron. One surface of the housing 11 is provided with an opening through which one or more electrode assemblies 2 can be placed into the housing 11 conveniently. The housing 11 is filled with an electrolyte such as an electrolyte solution.

The battery cell 10 may further include two electrode terminals 4. The two electrode terminals 4 may be disposed on the end cap 12. The end cap 12 is generally in the shape of a flat plate. Two electrode terminals 4 are fixed onto a flat surface of the end cap 12. The two electrode terminals 4 are a positive electrode terminal 4 and a negative electrode terminal 4 respectively. A connection strap 3 is disposed corresponding to each electrode terminal 4. The connection strap is located between the end cap 12 and the electrode assembly 2, and is configured to electrically connect the electrode assembly 2 and the electrode terminal 4.

In the battery cell 10, one or more electrode assemblies 2 may be disposed depending on actual use requirements. As shown in FIG. 4, a plurality of independent electrode assemblies 2 are disposed in the battery cell 10.

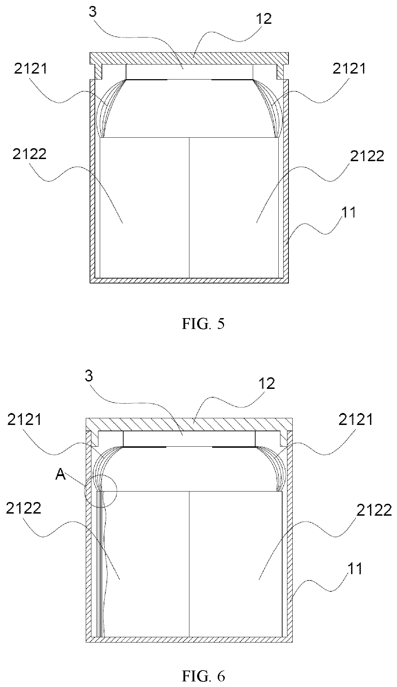

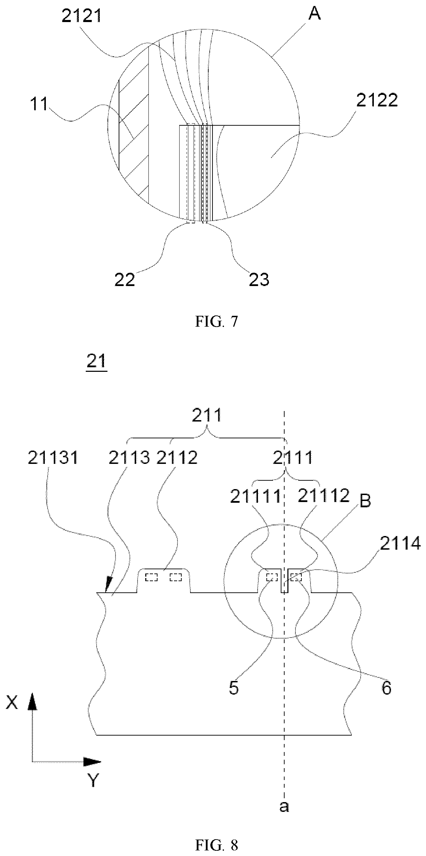

Referring to FIG. 5 and FIG. 6, FIG. 5 and FIG. 6 show a process of putting an electrode assembly 2 and a connection strap 3 into the shell 1. Referring to FIG. 5, the positive electrode plate includes an electrode plate body 2122 and a positive tab 2121. The electrode plate body 2122 is coated with a positive active material layer. In some embodiments, the electrode assembly 2 is a multi-layer jelly-roll structure formed by winding. After the positive electrode plate is wound into a plurality of layers, a plurality of positive tabs 2121 are located on the same side of the electrode assembly 2 to form a positive tab 2121 bundle. To assemble the battery cell 10, the technician needs to press down the end cap 12 so that the end cap 12 seals the opening of the housing 11 to seal the accommodation cavity of the shell 1. Referring to FIG. 6, after the end cap 12 seals the opening, the positive tab 2121 bundle is bent into a C shape under the action of the thrust force. The thrust force is transmitted to the electrode plate body 2122 so that the electrode plate body 2122 shows a tendency to expand outward. In this way, after the positive tab 2121 bundle is bent, a first clearance 22 appears between the layers of the electrode assembly 2. Referring to FIG. 7, the width of the first clearance 22 is generally 50 $\mu$m to 230 $\mu$m, much larger than the normal second clearance 23 of the electrode assembly 2 (the width of the second clearance 23 is less than 10 $\mu$m). The first clearance 22 gives rise to problems such as difficulty of lithium ion migration and lithium plating of the battery cell 10, thereby reducing the reliability of the battery cell 10.

According to some embodiments of this application, referring to FIG. 8 to FIG. 10, this application provides an electrode plate 21. The electrode plate 21 includes a current collector 211. The current collector 211 includes a main body 2113 and a plurality of tabs. The main body 2113 includes a first edge 21131 in a width direction of the main body. The tabs protrude from the first edge 21131. The plurality of tabs are spaced apart along a length direction of the main body 2113. The plurality of tabs include at least one first tab 2111. The first tab 2111 includes a first sub-tab 21111 and a second sub-tab 21112. A gap 2114 exists between the first sub-tab 21111 and the second sub-tab 21112.

The electrode plate 21 may be a positive electrode plate or a negative electrode plate.

The current collector 211 may be made of aluminum, copper, or the like.

The gap can reduce the area of the first tab 2111 and weaken the bending strength of the first tab 2111.

In some embodiments, the main body 2113 includes four edges: a first edge 21131, a second edge, a third edge, and a fourth edge. The main body 2113 includes a first edge 21131 and a third edge in the width direction of the main body. The first edge 21131 and the third edge are arranged opposite to each other. The main body 2113 includes a second edge and a fourth edge in the length direction of the main body. The second edge and the fourth edge are arranged opposite to each other. The second edge is a winding start end of the electrode plate 21, and the fourth edge is a winding finish end of the electrode plate 21.

Referring to FIG. 8, the direction X in FIG. 8 is the width direction of the main body 2113, and the direction Y in FIG. 8 is the length direction of the main body 2113.

In some embodiments, the plurality of tabs may include at least one first tab 2111 and at least one second tab 2112. The electrode plate 21 includes a winding start end and a winding finish end. The second tab 2112 is closer to the winding start end than the first tab 2111. The first tab 2111 is closer to the winding finish end than the second tab 2112.

The shape of the first sub-tab 21111 may be a rectangle, a trapezoid, or the like.

The first sub-tab 21111 and the second sub-tab 21112 may be disposed symmetrically with respect to the gap 2114.

The shape of the gap 2114 may be a strip, a polygonal line, a semicircle, or the like.

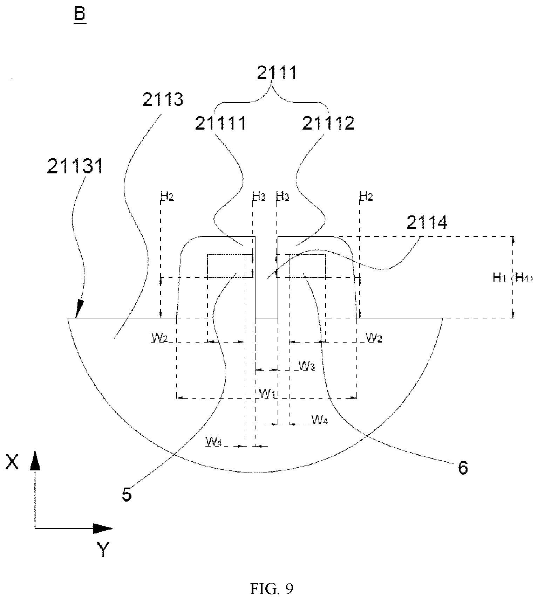

In some embodiments, referring to FIG. 9, along the width direction of the main body 2113, the gap 2114 may extend from a top edge of the tab toward the first edge 21131 until the root of the tab.

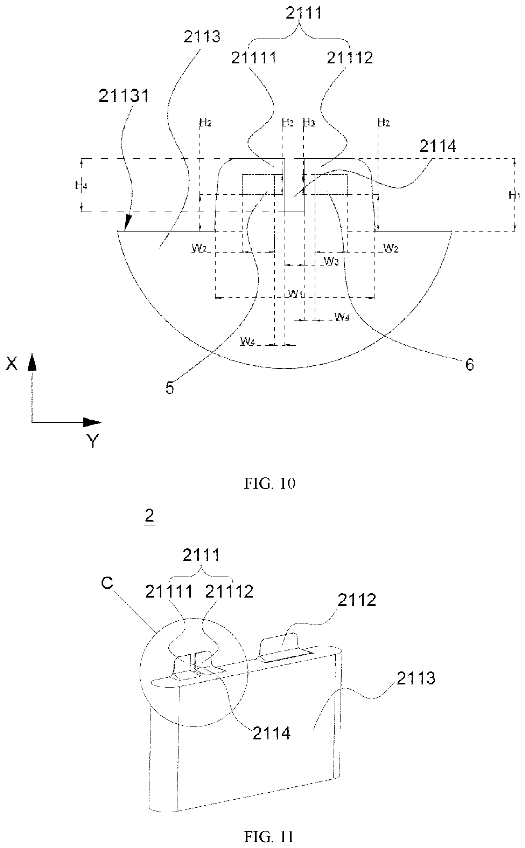

In some embodiments, referring to FIG. 10, along the width direction of the main body 2113, the gap 2114 may extend from the top edge of the tab toward the first edge 21131, and a distance exists between the end of the gap 2114 and the first edge 21131. Along the length direction of the main body 2113, the first sub-tab 21111 is a part of the first tab 2111 to the left side of the gap 2114, and the second sub-tab 21112 is a part of the second sub-tab 21112 to the right side of the gap 2114. The roots of the first sub-tab 21111 and the second sub-tab 21112 are flush with the end of the gap 2114.

In the technical solution disclosed in this embodiment of this application, the first tab 2111 includes a first sub-tab 21111 and a second sub-tab 21112. A gap 2114 exists between the first sub-tab 21111 and the second sub-tab 21112, thereby weakening the bending strength of the first tab 2111, reducing the difficulty of bending the first tab 2111 under pressure, reducing the risk of excessive deformation of the main body 2113 caused by an excessive external force required for bending the first tab 2111 under pressure, reducing the possibility of occurrence of the problems such as lithium plating of the battery cell 10, and in turn, improving reliability of the battery cell 10.

According to some embodiments of this application, the first tab 2111 includes a first sub-tab 21111 and a second sub-tab 21112. A gap 2114 exists between the first sub-tab 21111 and the second sub-tab 21112. A width of the first tab 2111 is $W_1$, and a width of the gap 2114 is $W_3$, satisfying: $0 < W_3 < \frac{W_1}{20}$, where the groove is configured to weaken the bending strength of the first tab.

In some embodiments, referring to FIG. 9, along the width direction of the main body 2113, the gap 2114 may extend from the top edge of the tab toward the first edge 21131, and the end of the gap 2114 extends to the root of the tab. The width $W_1$ of the first tab 2111 is the width of the root of the first tab 2111 along the length direction of the main body 2113. The width $W_3$ of the gap 2114 is the width of the end of the gap 2114. The relation $0 < W_3 < \frac{W_1}{20}$ means that the width of the end of the gap 2114 is greater than zero and less than one twentieth of the width of the first tab 2111, and the flow area loss caused by the gap 2114 is controlled to be not greater than 5%.

In some embodiments, referring to FIG. 10, along the width direction of the main body 2113, the gap 2114 may extend from the top edge of the tab toward the first edge 21131, and a distance exists between the end of the gap 2114 and the first edge 21131. Along the length direction of the main body 2113, the first sub-tab 21111 is a part of the first tab 2111 to the left side of the gap 2114, and the second sub-tab 21112 is a part of the second sub-tab 21112 to the right side of the gap 2114. The roots of the first sub-tab 21111 and the second sub-tab 21112 are flush with the end of the gap 2114. The width $W_1$ of the first tab 2111 is a width of a projection of the first tab 2111 projected on a plane along the width direction of the main body 2113, where the plane is a plane in which the gap 2114 is located. The width $W_3$ of the gap 2114 is the width of the end of the gap 2114. The relation $0 < W_3 < \frac{W_1}{20}$ means that the width of the end of the gap 2114 is greater than zero and less than one twentieth of the width of the tab, and the flow area loss caused by the gap 2114 is controlled to be not greater than 5%.

With such a design, on the premise that a gap 2114 exists on the first tab 2111, the first sub-tab 21111 and the second sub-tab 21112 still provide a relatively large flow area.

According to some embodiments of this application, referring to FIG. 8 and FIG. 9, the gap 2114 extends along the width direction of the main body 2113, and the first sub-tab 21111 and the second sub-tab 21112 are arranged along a length direction of the main body 2113.

This design makes the extending direction of the gap 2114 substantially consistent with the bending direction of the first tab 2111, thereby reducing the risk of tearing at the root of the first sub-tab 21111 and the root of the second sub-tab 21112 during the bending of the first tab 2111.

According to some embodiments of this application, referring to FIG. 9, in the width direction of the main body 2113, a height of the first tab 2111 is $H_1$, and a length of the gap 2114 is $H_4$, satisfying: $H_4 = H_1$.

This design makes the height of the first tab 2111 identical to the length of the gap 2114, thereby reducing the difficulty of processing the gap 2114.

According to some embodiments of this application, referring to FIG. 8, the first sub-tab 21111 and the second sub-tab 21112 are symmetrical with respect to the gap 2114.

In some embodiments, referring to FIG. 8, that the first sub-tab 21111 and the second sub-tab 21112 are symmetrical with respect to a center line a means that the first sub-tab 21111 and the second sub-tab 21112 are symmetrical with respect to the gap 2114.

This design optimizes the force consistency between the first sub-tab 21111 and the second sub-tab 21112.

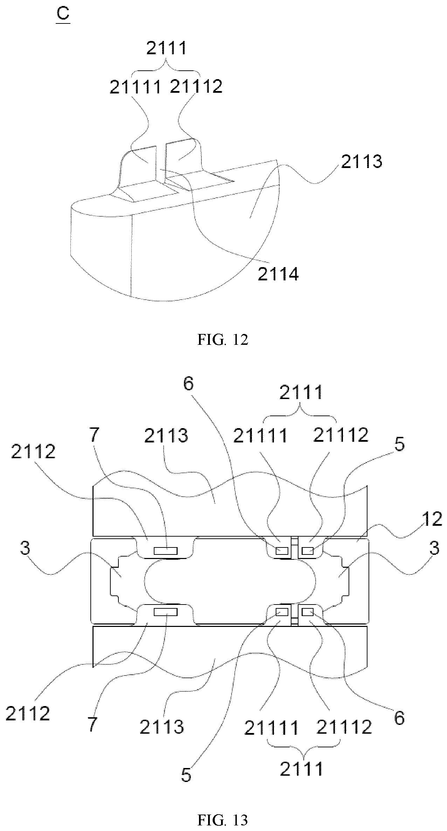

According to some embodiments of this application, referring to FIG. 11 and FIG. 12, all the tabs are the first tabs 2111; and/or the electrode plate 21 is a positive electrode plate; and/or the current collector 211 is made of aluminum. After the electrode plate 21 is wound, the plurality of first tabs 2111 are stacked to form a first tab bundle.

In some embodiments, referring to FIG. 11, after the electrode plate 21 is wound, a plurality of first tabs 2111 are stacked into a first tab bundle. The first tab bundle includes a plurality of gaps 2114. The projections of the plurality of gaps 2114 along the thickness direction of the electrode assembly 2 substantially coincide.

In some embodiments, all the tabs are the first tabs 2111.

In some embodiments, all the tabs are the first tabs 2111, and the electrode plate 21 is a positive electrode plate.

In some embodiments, all the tabs are the first tabs 2111, and the current collector 211 is made of aluminum.

In some embodiments, all the tabs are the first tabs 2111, the electrode plate 21 is a positive electrode plate, and the current collector 211 is made of aluminum.

In some embodiments, the electrode plate 21 is a positive electrode plate.

In some embodiments, the electrode plate 21 is a positive electrode plate, and the current collector 211 is made of aluminum.

In some embodiments, the current collector 211 is made of aluminum.

This design reduces the difficulty of bending the first tab bundle under pressure, reduces the risk of widening the gap between layers of the wound main body 2113 due to an excessive external force required for bending the first tab bundle under pressure, and in turn, improves the reliability of the battery cell 10.

According to some embodiments of this application, this application further provides an electrode assembly 2. The electrode assembly includes the electrode plate 21 disclosed in any one of the above technical solutions.

According to some embodiments of this application, this application further provides a battery cell 10. The battery cell includes the electrode assembly 2 disclosed in any one of the above technical solutions.

According to some embodiments of this application, referring to FIG. 13, the battery cell 10 further includes a conductive piece. The first sub-tab 21111 is welded to the conductive piece to form a first weld region 5. The second sub-tab 21112 is welded to the conductive piece to form a second weld region 6.

The formation of the first weld region 5 and the second weld region 6 enables a high flow capacity of both the first sub-tab 21111 and the second sub-tab 21112.

In some embodiments, the plurality of tabs may include at least one first tab 2111 and at least one second tab 2112. The electrode plate 21 includes a winding start end and a winding finish end. The second tab 2112 is closer to the winding start end than the first tab 2111. The first tab 2111 is closer to the winding finish end than the second tab 2112. The second tab 2112 also includes a first weld region 5 and a second weld region 6.

The conductive piece may be a connection strap 3, an electrode terminal 4, or the like.

According to some embodiments of this application, referring to FIG. 9 and FIG. 10, in the length direction of the main body 2113, the width of the first tab 2111 is $W_1$, and the width of the gap 2114 is $W_3$. The dimension of the first weld region 5 along the length direction of the main body 2113 is equal to the dimension of the second weld region 6 along the length direction of the main body 2113 and is $W_2$, satisfying:

$$0 < W_2 < \frac{W_1}{2} - \frac{W_3}{2}$$

; or, in the length direction of the main body, the distance between the first weld region and the gap is equal to the distance between the second weld region and the gap and is $W_4$, satisfying: $0 < W_4 < \frac{W_1}{2} - \frac{W_3}{2}$.

The relation $0 < W_2 < \frac{W_1}{2} - \frac{W_3}{2}$ means that, along the length direction of the main body 2113, the dimension of the first weld region 5 is less than the width of the first sub-tab 21111, and the dimension of the second weld region 6 is less than the width of the second sub-tab 21112. The first weld region 5 and the second weld region 6 are located inside the first tab 2111.

$W_4$ means a minimum distance between the first weld region 5 and the gap 2114 along the length direction of the main body 2113, or a minimum distance between the second weld region 6 and the gap 2114 along the length direction of the main body 2113.

Referring to FIG. 9 and FIG. 10, the relation $0 < W_4 < \frac{W_1}{2} - \frac{W_3}{2}$ means that the first weld region 5 does not intersect the right edge of the first sub-tab 21111, and the second weld region 6 does not intersect the left edge of the second sub-tab 21112.

This design ensures that the first weld region 5 does not intersect the edge of the first sub-tab 21111 and the second weld region 6 does not intersect the edge of the second sub-tab 21112. This design reduces the risk that a part of the first weld region 5 falls in the gap 2114 to cause a cold solder joint in a process of welding the first sub-tab 21111 to the conductive piece, and reduces the risk that a part of the second weld region 6 falls in the gap 2114 to cause a cold solder joint in a process of welding the second sub-tab 21112 to the conductive piece.

According to some embodiments of this application, referring to FIG. 9 and FIG. 10, in the length direction of the main body, the height of the first tab 2111 is $H_1$, and the distance between the first weld region 5 and the first edge 21131 is equal to the distance between the second weld region 6 and the first edge 21131 and is $H_2$, satisfying: $\frac{H_1}{2} < H_2 < H_1$.

$H_2$ means the minimum distance between the first weld region 5 and the first edge 21131 along the width direction of the main body 2113, or the minimum distance between the second weld region 6 and the first edge 21131 along the width direction of the main body 2113.

The relation $\frac{H_1}{2} < H_2 < H_1$ means that the first weld region 5 is located at the upper half of the first sub-tab 21111, and the second weld region 6 is located at the upper half of the second sub-tab 21112.

After the first sub-tab 21111 is welded to the conductive piece, the bending difficulty of the first sub-tab 21111 is increased at the position of the first weld region 5. After the second sub-tab 21112 is welded to the conductive piece, the bending difficulty of the second sub-tab 21112 is increased at the position of the second weld region 6. During bending of the first sub-tab 21111, if the first weld region 5 is located at the upper half of the first sub-tab 21111, the bending difficulty at the root of the first sub-tab 21111 does not change much; if the second weld region 6 is located at the upper half of the second sub-tab 21112, the bending difficulty at the root of the second sub-tab 21112 does not change much.

The above design enables the first weld region 5 to be located at the upper half of the first sub-tab 21111, and enables the second weld region 6 to be located at the upper half of the second sub-tab 21112. After the first sub-tab 21111 is welded to the conductive piece and the second sub-tab 21112 is welded to the conductive piece, the above design reduces the risk of widening the gap between the layers of the wound electrode assembly 2 due to increased difficulty of bending the roots of the first sub-tab 21111 and the second sub-tab 21112 under pressure, and improves the reliability of the battery cell 10.

According to some embodiments of this application, referring to FIG. 9 and FIG. 10, in the width direction of the main body 2113, the dimension of the first weld region 5 is equal to the dimension of the second weld region 6 and is $H_3$, satisfying: $0 < H_3 < \frac{H_1}{2}$.

The relation $0 < H_3 < \frac{H_1}{2}$ means that, along the width direction of the main body 2113, the dimension of the first weld region 5 is less than one half of the height of the first sub-tab 21111, and the dimension of the second weld region 6 is less than one half of the height of the second sub-tab 21112.

Setting the dimensions of the first weld region and the second weld region to fall within a reasonable range can reduce the risk that the force required to bend the first tab is increased due to the excessive dimensions of the first weld region and the second weld region, and that the external force is transmitted to the main body and results in a larger gap between layers of the electrode assembly.

According to some embodiments of this application, the battery cell 10 includes an electrode terminal 4. The conductive piece is a connection strap 3 that connects the first tab 2111 and the electrode terminal 4, or the conductive piece is the electrode terminal 4.

According to some embodiments of this application, this application further provides a battery 1000. The battery includes the battery cell 10 disclosed in any one of the above technical solutions.

According to some embodiments of this application, this application provides an electrical device. The electrical device includes the electrical device disclosed in the above embodiment. The battery 1000 is configured to provide electrical energy.

According to some embodiments of this application, referring to FIG. 9, this application provides a positive electrode plate. The positive electrode plate includes a current collector 211. The current collector 211 is made of aluminum. The current collector 211 includes a main body 2113 and a plurality of tabs. The main body 2113 includes a first edge 21131 in a width direction of the main body. The tabs protrude from the first edge 21131. The plurality of tabs are spaced apart along a length direction of the main body 2113. All the tabs are the first tabs 2111. The first tab 2111 includes a first sub-tab 21111 and a second sub-tab 21112. A gap 2114 exists between the first sub-tab 21111 and the second sub-tab 21112.

The gap 2114 extends along the width direction of the main body 2113. The first sub-tab 21111 and the second sub-tab 21112 are arranged along the length direction of the main body 2113. The height of the first tab 2111 is $H_1$, and the length of the gap 2114 is $H_4$, satisfying: $H_4 = H_1$. The first sub-tab 21111 and the second sub-tab 21112 are symmetrical with respect to the gap 2114. The width of the first tab 2111 is $W_1$, and the width of the gap 2114 is $W_3$, satisfying: $0 < W_3 < \frac{W_1}{20}$.

According to some embodiments of this application, referring to FIG. 4 and FIG. 9 to FIG. 13, this application provides a battery cell 10. The battery cell 10 includes an electrode assembly 2, a connection strap 3, a shell 1, and two electrode terminals 4. The shell 1 includes a housing 11 and an end cap 12. The housing 11 includes an accommodation cavity formed by a plurality of walls and includes an opening. The end cap 12 is disposed at the opening to seal the accommodation cavity. The accommodation cavity is configured to accommodate the electrode assembly 2.

The two electrode terminals 4 are a positive electrode terminal 4 and a negative electrode terminal 4 respectively. A connection strap 3 is disposed corresponding to each electrode terminal 4. The connection strap 3 is located between the end cap 12 and the electrode assembly 2, and is configured to electrically connect the electrode assembly 2 and the electrode terminal 4.

The electrode assembly 2 includes a positive electrode plate, a negative electrode plate, and a separator.

The positive electrode plate includes a current collector 211. The current collector 211 is made of aluminum. The current collector 211 includes a main body 2113 and a plurality of tabs. The main body 2113 includes a first edge 21131 in a width direction of the main body. The tabs protrude from the first edge 21131. The plurality of tabs are spaced apart along a length direction of the main body 2113. All the tabs are the first tabs 2111. The first tab 2111 includes a first sub-tab 21111 and a second sub-tab 21112. A gap 2114 exists between the first sub-tab 21111 and the second sub-tab 21112.

The gap 2114 extends along the width direction of the main body 2113. The first sub-tab 21111 and the second sub-tab 21112 are arranged along the length direction of the main body 2113. The height of the first tab 2111 is $H_1$, and the length of the gap 2114 is $H_4$, satisfying: $H_4 = H_1$. The first sub-tab 21111 and the second sub-tab 21112 are symmetrical with respect to the gap 2114. The width of the first tab 2111 is $W_1$, and the width of the gap 2114 is $W_3$, satisfying: $0 < W_3 < \frac{W_1}{20}$.

The first sub-tab 21111 is welded to the connection strap 3 to form a first weld region 5. The second sub-tab 21112 is welded to the connection strap 3 to form a second weld region 6. The negative tab is welded to the connection strap 3 to form a third weld region 7. The connection strap 3 is configured to lead out the electrical energy of the electrode assembly 2.

The dimension of the first weld region 5 along the length direction of the main body 2113 is equal to the dimension of the second weld region 6 along the length direction of the main body 2113 and is $W_2$, satisfying: $0 < W_2 < \frac{W_1}{2} - \frac{W_3}{2}$.

Along the length direction of the main body 2113, the distance between the first weld region 5 and the gap 2114 is equal to the distance between the second weld region 6 and the gap 2114 and is $W_4$, satisfying: $0 < W_4 < \frac{W_1}{2} - \frac{W_3}{2}$.

The height of the first tab 2111 is $H_1$, and the distance between the first weld region 5 and the first edge 21131 is equal to the distance between the second weld region 6 and the first edge 21131 and is $H_2$, satisfying: $\frac{H_1}{2} < H_2 < H_1$.

Along the width direction of the main body 2113, the dimension of the first weld region 5 is equal to the dimension of the second weld region 6 and is $H_3$, satisfying: $0 < H_3 < \frac{H_1}{2}$. The electrode assembly 2 is a multi-layer jelly-roll structure formed by winding. After a positive electrode plate, a separator, and a negative electrode plate are stacked in sequence, the whole stacked structure is wound into a plurality of layers to form an electrode assembly 2. The electrode assembly 2 is compacted from a fluffy state to a compact state through hot-press shaping. After the positive electrode plate is wound into a plurality of layers, a plurality of first tabs 2111 are located on the same side of the electrode assembly 2 to form a first tab bundle. After the negative electrode plate is wound into a plurality of layers, a plurality of negative tabs are located on the same side of the electrode assembly 2 to form a negative tab bundle.

In a process of assembling a battery cell 10, the first sub-tab 21111 and the second sub-tab 21112 are welded to the connection strap 3, and the negative tab is welded to the connection strap 3, and then the connection strap 3 is welded to the end cap 12. Finally, the electrode assembly 2 is placed into the housing 11, and an external force is applied to the end cap 12 so that the end cap 12 seals the opening of the housing 11 to complete the assembling of the battery cell 10. In this case, a plurality of first tabs 2111 and a plurality of negative tabs are bent into a C shape under the action of the external force.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1. **An electrode** plate, **characterized in that** the electrode plate comprises a current collector, the current collector comprises a main body and a plurality of tabs, the main body comprises a first edge in a width direction of the main body, the tabs protrude from the first edge, and the plurality of tabs are spaced apart along a length direction of the main body; and

the plurality of tabs comprise at least one first tab, the first tab comprises a first sub-tab and a second sub-tab, and a gap exists between the first sub-tab and the second sub-tab.

2. The electrode plate according to claim 1, **characterized in that** a width of the first tab is $W_1$, and a width of the gap is $W_3$, satisfying: $0 < W_3 < \frac{W_1}{20}$; and the gap is configured to weaken bending strength of the first tab.

3. The electrode plate according to claim 1 or 2, **characterized in that** the gap extends along the width direction of the main body, and the first sub-tab and the second sub-tab are arranged along a length direction of the main body.

4. The electrode plate according to claim 3, **characterized in that**, in the width direction of the main body, a height of the first tab is $H_1$, and a length of the gap is $H_4$, satisfying: $H_4 = H_1$.

5. The electrode plate according to any one of claims 1 to 4, **characterized in that** the first sub-tab and the second sub-tab are symmetrical with respect to the gap.

6. The electrode plate according to any one of claims 1 to 5, **characterized in that** all the tabs are the first tabs; and/or the electrode plate is a positive electrode plate; and/or the current collector is made of aluminum.

7. An electrode assembly, **characterized in that** the electrode assembly is the electrode assembly according to any one of claims 1 to 6.

8. A battery cell, **characterized in that** the battery cell comprises the electrode assembly according to claim 7.

9. The battery cell according to claim 8, **characterized in that** the battery cell further comprises:
a conductive piece, wherein the first sub-tab is welded to the conductive piece to form a first weld region, and the second sub-tab is welded to the conductive piece to form a second weld region.

10. The battery cell according to claim 9, **characterized in that**, in the length direction of the main body, a width of the first tab is $W_1$, and a width of the gap is $W_3$;

a dimension of the first weld region along the length direction of the main body is equal to a dimension of the second weld region along the length direction of the main body and is $W_2$, satisfying: $0 < W_2 < \frac{W_1}{2} - \frac{W_3}{2}$; or
in the length direction of the main body, a distance between the first weld region and the gap is equal to a distance between the second weld region and the gap and is $W_4$, satisfying: $0 < W_4 < \frac{W_1}{2} - \frac{W_3}{2}$.

11. The battery cell according to claim 9 or 10, **characterized in that**, in the length direction of the main body, a height of the first tab is $H_1$, and a distance between the first weld region and the first edge is equal to a distance between the second weld region and the first edge and is $H_2$, satisfying: $\frac{H_1}{2} < H_2 < H_1$.

12. The battery cell according to any one of claims 9 to 11, **characterized in that** a height of the first tab is $H_1$, and, along the width direction of the main body, a dimension of the first weld region is equal to a dimension of the second weld region and is $H_3$, satisfying: $0 < H_3 < \frac{H_1}{2}$.

13. The battery cell according to any one of claims 9 to 12, **characterized in that** the battery cell comprises an electrode terminal; and
the conductive piece is a connection strap that connects the first tab and the electrode terminal, or the conductive piece is the electrode terminal.

14. A battery, **characterized in that** the battery comprises the battery cell according to any one of claims 8 to 13.

15. An electrical device, **characterized in that** the electrical device comprises the battery according to claim 14, and the battery is configured to provide electrical energy.

10000

FIG. 1

1000

FIG. 2

100

10

10

FIG. 3

10

4

4

12

1

3

11

2

FIG. 4

FIG. 5

FIG. 6

FIG. 7

FIG. 8

FIG. 9

FIG. 10

FIG. 11

C

2111

21111 21112

2113

2114

FIG. 12

6   2111

7   2113   21111   21112   5

2112

12

3   3

2112

7   2113   21111   21112   6

5   2111

FIG. 13

## INTERNATIONAL SEARCH REPORT

International application No.

**PCT/CN2023/128306**

### A. CLASSIFICATION OF SUBJECT MATTER

H01M50/533(2021.01)i

According to International Patent Classification (IPC) or to both national classification and IPC

### B. FIELDS SEARCHED

Minimum documentation searched (classification system followed by classification symbols)

IPC: H01M50/-

Documentation searched other than minimum documentation to the extent that such documents are included in the fields searched

Electronic data base consulted during the international search (name of data base and, where practicable, search terms used)

CNTXT, ENTXTC, CNKI, ENTXT, ISI_Web of Science: 极片, 极耳, 间隙, 缝隙, 间隔, 裂隙, 裂缝, 电极, 电池, 安全, 可靠性, tab??, pole??, battery, cell, reliability, safety

### C. DOCUMENTS CONSIDERED TO BE RELEVANT

| Category* | Citation of document, with indication, where appropriate, of the relevant passages | Relevant to claim No. |
|---|---|---|
| PX | CN 218939957 U (CONTEMPORARY AMPEREX TECHNOLOGY CO., LTD.) 28 April 2023 (2023-04-28) entire document | 1-15 |
| Y | CN 114975864 A (BEIJING XIAOMI MOBILE SOFTWARE CO., LTD.) 30 August 2022 (2022-08-30) description, paragraphs 2-46 | 1-15 |
| Y | JP 2000106170 A (SANOH IND. CO., LTD.) 11 April 2000 (2000-04-11) description, paragraphs 7 and 16, and figure 6 | 1-15 |
| Y | CN 105070880 A (SHIDA BATTERY TECHNOLOGY CO., LTD.) 18 November 2015 (2015-11-18) description, paragraphs 2-16, and figures 1-6 | 1-15 |
| Y | CN 207719304 U (SHENZHEN OPTIMUMNANO ENERGY CO., LTD.) 10 August 2018 (2018-08-10) description, paragraphs 2-15, and figure 1 | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 February 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/128306** |

### C.    DOCUMENTS CONSIDERED TO BE RELEVANT

| Category* | Citation of document, with indication, where appropriate, of the relevant passages | Relevant to claim No. |
| --- | --- | --- |
| Y | CN 217740570 U (CONTEMPORARY AMPEREX TECHNOLOGY CO., LTD.) 04 November 2022 (2022-11-04)<br>  description, paragraphs 2-25 and 63, and figures 4-6 | 1-15 |
| Y | WO 2022051915 A1 (DONGGUAN POWERAMP TECHNOLOGY LIMITED et al.) 17 March 2022 (2022-03-17)<br>  description, page 1, paragraph 2-page 3, paragraph 5, and figures 1-11 | 1-15 |
| A | CN 113458635 A (BYD CO., LTD.) 01 October 2021 (2021-10-01)<br>  description, paragraphs [0002]-[0019] | 1-15 |

Form PCT/ISA/210 (second sheet) (July 2022)

**INTERNATIONAL SEARCH REPORT**
Information on patent family members

International application No.

**PCT/CN2023/128306**

| Patent document cited in search report | | | Publication date (day/month/year) | Patent family member(s) | | | Publication date (day/month/year) |
|---|---|---|---|---|---|---|---|
| CN | 218939957 | U | 28 April 2023 | None | | | |
| CN | 114975864 | A | 30 August 2022 | None | | | |
| JP | 2000106170 | A | 11 April 2000 | JP | 3636603 | B2 | 06 April 2005 |
| CN | 105070880 | A | 18 November 2015 | CN | 105070880 | B | 25 August 2017 |
| CN | 207719304 | U | 10 August 2018 | None | | | |
| CN | 217740570 | U | 04 November 2022 | None | | | |
| WO | 2022051915 | A1 | 17 March 2022 | None | | | |
| CN | 113458635 | A | 01 October 2021 | None | | | |

Form PCT/ISA/210 (patent family annex) (July 2022)

**EP 4 601 110 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202223034573